# EUROPÄISCHE PATENTANMELDUNG

(11) **EP 2 755 180 A1**
(43) Veröffentlichungstag der Anmeldung: **16.07.2014**
(21) Anmeldenummer: 13000174.6
(22) Anmeldetag: 14.01.2013
(51) Int. Cl.: G06Q 30/02

(54) **Interaktives und dynamisches Preisverhandlungs- Bonus-/ Rabatt- Verfahren für E-Commerce (E-Shopping) und die reale Geschäftswelt (Shopping)**

(71) Anmelder: Multimedia Consulting Stucki, 3113 Rubigen (CH)
(72) Erfinder: Stucki, Hans-Peter, 3113 Rubigen (CH)

(57) **Zusammenfassung**

**Das Preisverhandlungs- Bonus- / Rabatt- Verfahren erlaubt es Verkäufern bzw. Firmen, einen erweiterten Bonus- / Rabatt- auf reguläre und / oder bereits verbilligte Produkte und Dienstleistungen im E-Commerce und in der realen Geschäftswelt, ohne finanziellen Verlust zu gewähren. Dieser vom Käufer selbständig erzeugte Bonus / Rabatt ist dynamisch und kann von Produkt zu Produkt und Dienstleistung zu Dienstleistung verschieden sein.**

Der Zugang zum Preisverhandlungs- Bonus- / Rabatt -Verfahren ist durch den Einsatz von sog. "PV-Optionen" möglich. Diese bilden die Grundlage für den Zugang zum Preisverhandlungs-Verfahren und sind Bestandteil bei der Erzeugung des variablen und dynamischen Bonus/Rabatts.

Die Berechnung des Bonus / Rabatts beruht auf allgemein gültigen, mathematischen Verkaufs- und Vertriebs-relevanten Formeln.

Der Bonus / Rabatt wird durch den einzelnen Käufer interaktiv (zeitlich abhängig oder unabhängig) erzeugt und er bestimmt selber, ob und wann er das Produkt mit diesem erzeugten Rabatt kaufen will. Er hat dabei immer eine Sofort-Kaufgarantie.

Jedes im E-Commerce oder in der realen Geschäftswelt, mit dem Preisverhandlungs- Bonus- Rabatt Verfahren vergünstigte und gekaufte Produkt, oder jede Dienstleistung, wird immer günstiger sein als anderswo (E-Commerce und /oder in der realen Geschäftswelt).

Mit dem Preisverhandlungs- Bonus- / Rabatt- Verfahren *wird der Käufer spielerisch und ohne Kaufzwang das gewünschte Produkt und die Dienstleistung erwerben können* und damit wird eine intensive und langfristige Kundenbindung erzeugt.

Der messbare Effekt für die Verkäufer von Produkten und Dienstleistungen besteht darin, dass mit dem Preisverhandlungs- Bonus- / Rabatt- Verfahren ein *Mehrverkauf* und damit *ein_Mehrumsatz* erzeugt wird und dieser wiederum wird mit dem Preisverhandlungs- Bonus- / Rabatt- Verfahren rückgekoppelt, um dadurch den grösst möglichen Bonus / Rabatt in dynamischer Form zu gewährleisten.

Das Preisverhandlungs- Bonus- / Rabatt Verfahren kann auch als *Multiuser System* betrieben werden, indem mehrere gleichzeitige Käufer ein gleiches oder ähnliches Produkt über das Preisverhandlungs- Bonus- / Rabatt- Verfahren verbilligen und kaufen können (Gruppenbildung).

## Beschreibung

### Gegenstand und/oder technisches Gebiet

Die Erfindung betrifft ein Verfahren für ein interaktives und dynamisches Preisverhandlungs-Verfahren, auf Bonus- / Rabatt basierend für E-Commerce [2/3/3a] und die reale Geschäftswelt (Shopping / Einkaufen) [4]

### Darlegung der Erfindung

### Stand der Technik

Es gibt heute verschiedene Verfahren für Bonus- / Rabatt - Systeme im E-Commerce [2/3/3a] und in der realen Geschäftswelt [4], welche darauf basieren, dass der gewährte Bonus / Rabatt zum Voraus festgelegt, d.h. statisch ist und vom Anbieter i.d. R. dem Käufer öffentlich bekannt gegeben wird. Oft ist er mit einer vorgegebenen Zeitlimite (Auktion) oder Mindestmenge verbunden, um Dienste und Produkte zu verbilligen.

### Nachteile

Die heutigen Bonus-/ Rabatt- Systeme sind sehr aufwendig und Personal intensiv, um diese auf dem aktuellen Stand zu halten. Zudem ist in den meisten Fällen ein fixer Bonus / Rabatt vorgegeben, welcher oft durch zeitliche Vorgaben beeinflusst wird und die Käufer damit in eine Stress-Situation oder baldigen Ablehnung einer Teilnahme bringen kann. Weitere Bonus- und Rabatt-Verfahren sind bekannt, welche auf die Dynamik einer Gruppe von einer minimalen Anzahl Käufern fixiert ist, um einen, zum Voraus bestimmten, Bonus/Rabatt zu gewährleisten (z.B. Groupon). Auch bei solchen Verfahren werden die Teilnehmer in eine Unsicherheit und Stress-Situation gebracht, weil nie sicher ist, ob ein verbilligter Kauf tatsächlich stattfinden kann und wird.

### Aufgabe

Die Aufgabe der vorliegenden Erfindung ist es, ein interaktives und dynamisches Preisverhandlungs- bzw. Bonus- und Rabatt -Verfahren [1] zu entwickeln, welches aufgrund von mathematischen und marktwirtschaftlichen Formeln und Faktoren jedes beliebige Produkt und jede beliebige Dienstleistung im E-Commerce und der realen Geschäftswelt individuell und sofort (gesicherter Kauf) sowie ohne limitierten Zeitdruck für die Käufer, verbilligen kann.

### Lösung

Die Aufgabe wird durch die Merkmale des Patentanspruchs 1 und den weiteren Unteransprüchen gelöst.

### Vorteile

Vorteilhafte Weiterbildungen des definierten Preisverhandlungs- bzw. Bonus- / Rabatt - Verfahrens [1] ergeben sich aus den weiteren abhängigen Patent Unteransprüchen. Der Vorteil der Erfindung besteht darin, dass Firmen und oder private Anbieter Ihre Produkte und Dienstleistungen im E-Commerce [2 / 3 / 3 a] und in der realen Geschäftswelt (Shopping / Einkaufen aller Arten) [4] ohne finanziellen Verlust sofort verbilligen können, weil die Berechnung des Bonus-Verfahrens interaktiv, dynamisch, d.h. aufgrund der aktuellen Verkaufszahlen und weiterer marktwirtschaftlicher Faktoren (Rückkoppelung) erfolgt.

### Aufzählung der Figuren / Zeichnungen

Die Erfindung des Preisverhandlungs- bzw. Bonus- / Rabatt -Verfahrens wird anhand eines Ausführungsbeispiels, welches in den Zeichnungen dargestellt ist, näher erläutert. Es zeigt:

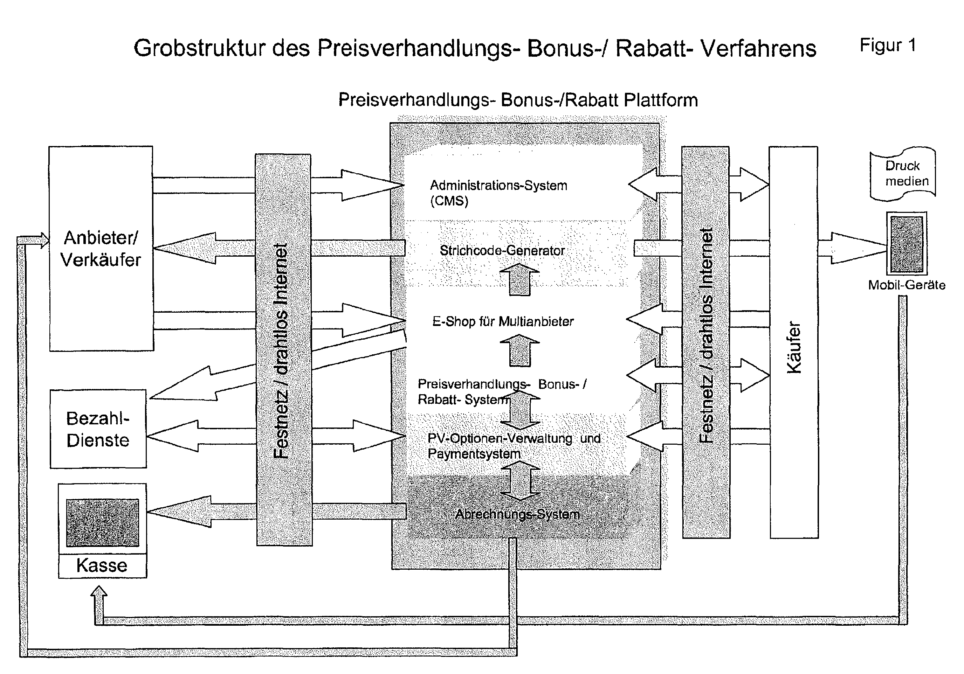

Fig. 1: Grobstruktur der Preisverhandlungs- bzw. Bonus- / Rabatt -Verfahrens

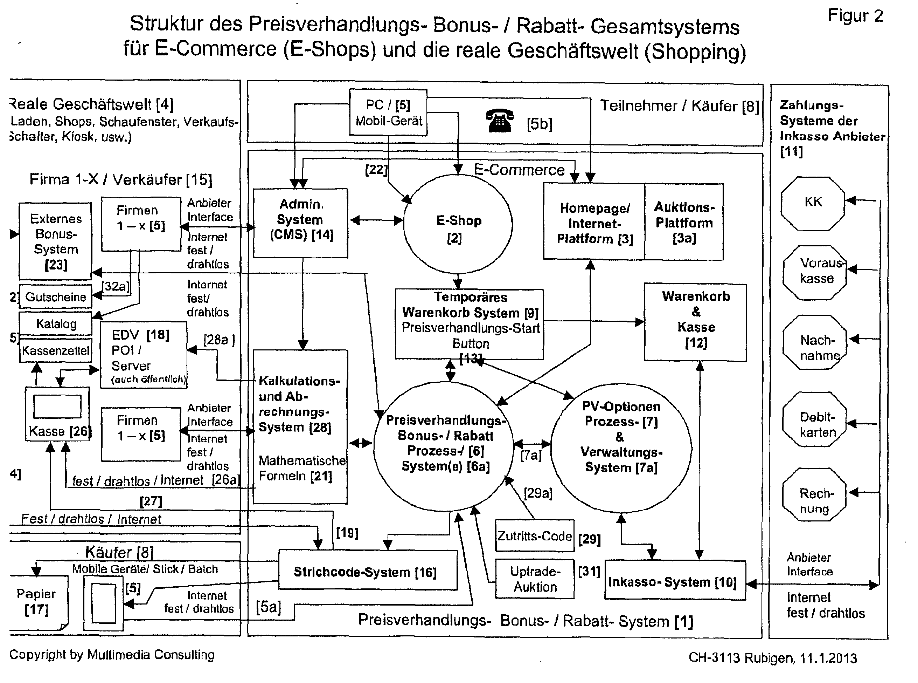

Fig. 2: Struktur des Preisverhandlungs- bzw. Bonus- / Rabatt - Gesamtverfahrens

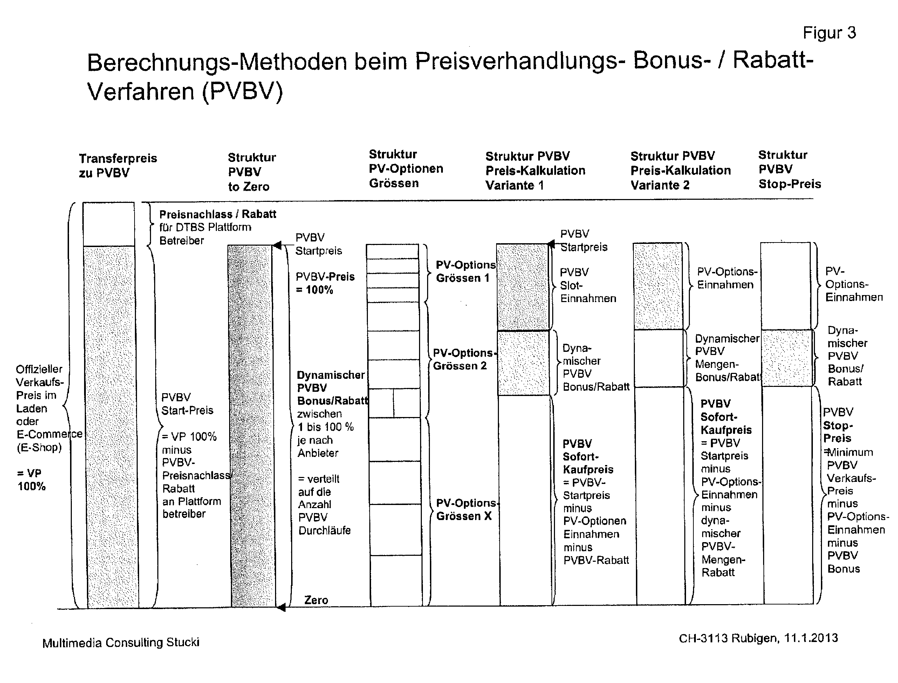

Fig. 3 Berechnungs -Methoden beim Preisverhandlungs- bzw. Bonus- /Rabatt -Verfahren

### Ausführung der Erfindung

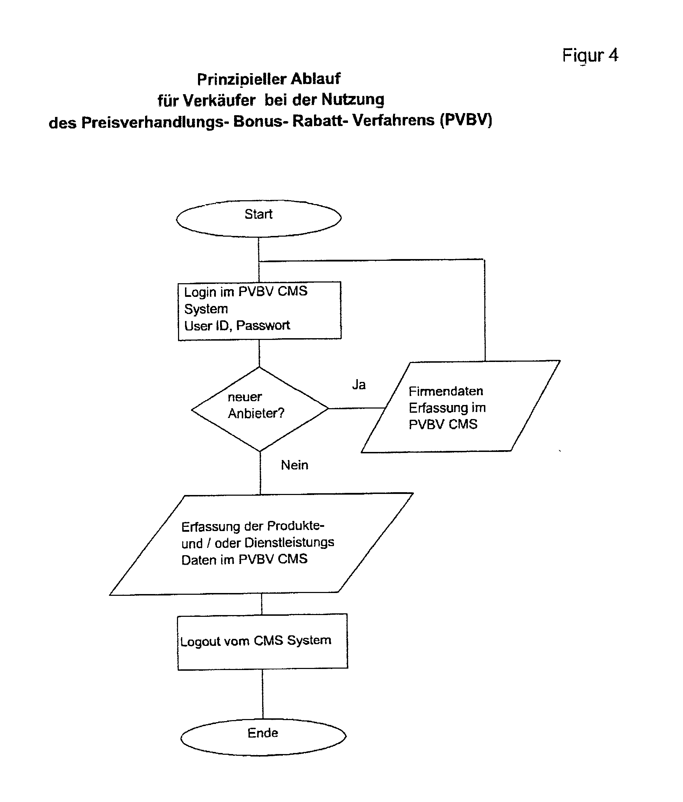

Fig. 4 Prinzipieller Ablauf beim Preisverhandlungs- bzw. Bonus- / Rabatt -Verfahrens aus der Sicht des Käufers

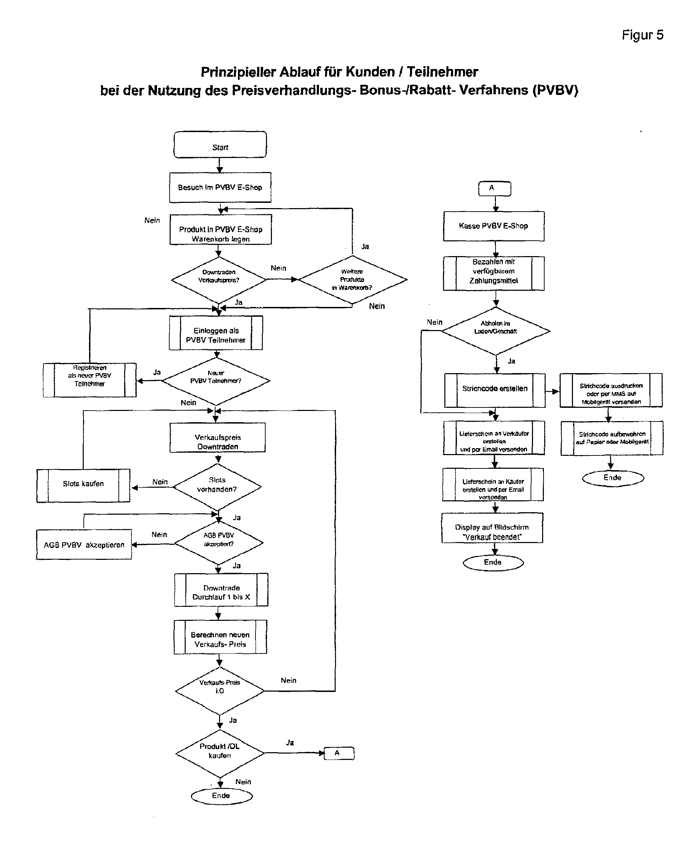

Fig. 5 Prinzipieller Ablauf beim Preisverhandlungs- bzw. Bonus- / Rabatt- Verfahren aus der Sicht des Verkäufers

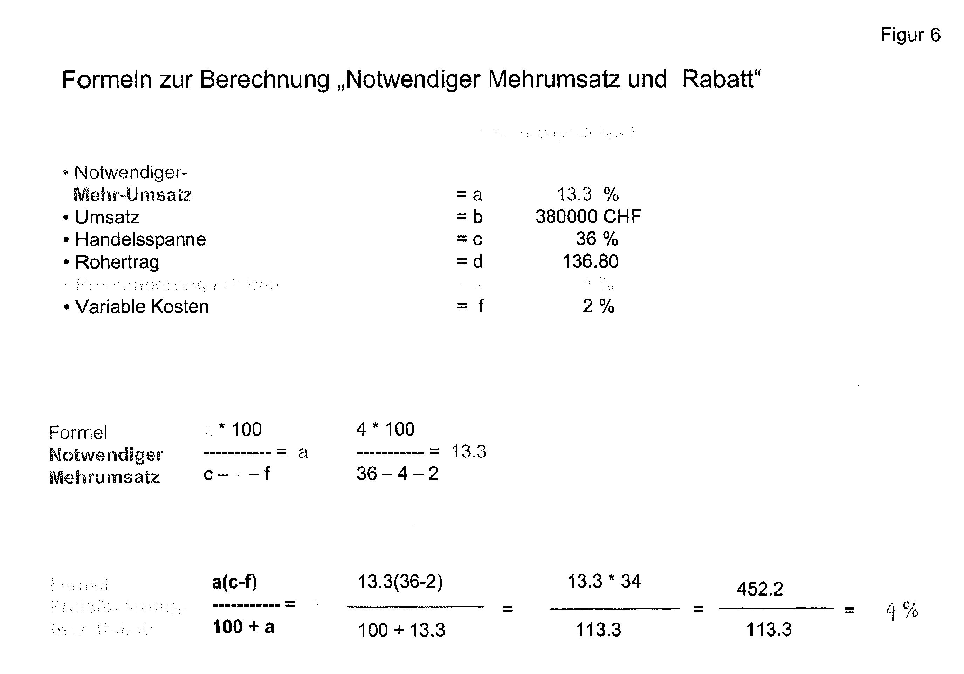

Fig. 6 Formeln für die Berechnung des notwendigen Mehrumsatzes und des gewährten Bonus / Rabatts

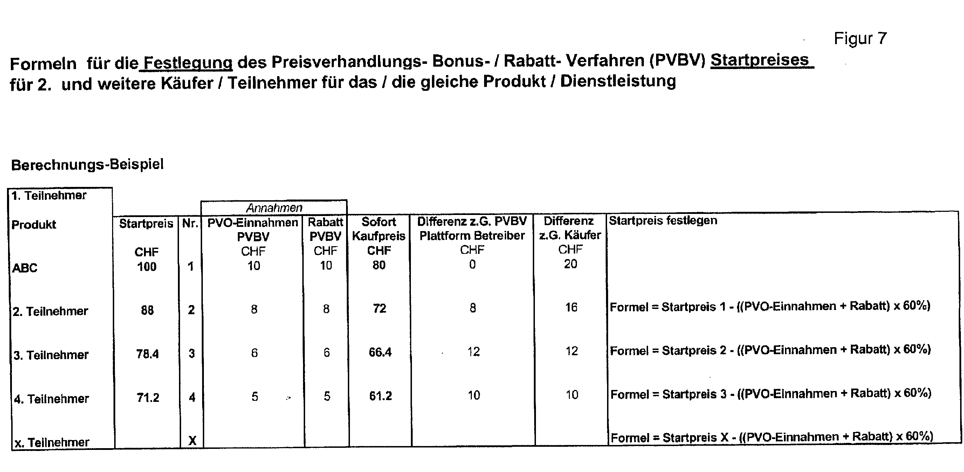

Fig. 7 Formeln für die Festlegung des Startpreises für 2 und weitere Teilnehmer am Preisverhandlungs- bzw. Bonus- / Rabatt -Verfahren

## Patentansprüche

1. Das Preisverhandlungs- Bonus-/ Rabatt-Verfahren [1] ist **dadurch gekennzeichnet: dass** der Verkaufspreis jedes/jeder beliebigen Produkts bzw. Dienstleistung im E-Commerce (E-Shop) [2] und / oder auf einer Internet Plattform (Homepage) [3/3a] und / oder in der realen Geschäftswelt (Schaufenster, Laden, Einkaufszentrum, Markt, Shop usw.) [4] via jedes stationäre und / oder mobiles Gerät mit oder ohne Bildschirm und Internetverbindung (drahtgebunden und drahtlos) [5] interaktiv und proaktiv mit dem Preisverhandlungs- Bonus- / Rabatt- Verfahren [6], und mittels dem Einsatz von sog. PV-Optionen (fiktive Zutrittstickets) [7] individuell und dynamisch verbilligt und im E-Commerce [2/3/3a] und in der realen Geschäftswelt [4] sofort gekauft werden kann.
Unteranspruch 1.1 **dadurch gekennzeichnet,**
**dass** der gewährte Bonus / Rabatt dem Käufer nicht zum Voraus bekannt ist und interaktiv sowie dynamisch erzeugt [6] und dass die Höhe des gewährten Bonus / Rabatts zeit-unabhängig und / oder individuell zeitlich gesteuert, durch den Käufer [8] erzeugt wird, sowie dass der Kaufentscheid für den Teilnehmer, bzw. Käufer [8] nach einer Bonus-Erzeugung [6] freiwillig ist und bei einem Nichtkauf, der (durch diesen Teilnehmer) erzeugte Bonus ganz oder teilweise an den nächsten Teilnehmer [8] als sog. neuer Startpreis automatisch (ganz oder teilweise) weitervererbt werden kann
Unteranspruch 1.2 **dadurch gekennzeichnet,**
**dass** der dynamische Preisverhandlungs- Bonus / Rabatt [6] bei einem Kaufentscheid im E-Commerce (E-Shop) [2/3/3a] und in der realen Geschäftswelt (Laden, Einkaufszentrum, Markt, Shop usw.) [4] nur via das beschriebene Preisverhandlungs- Bonus- / Rabatt Verfahren [1] beansprucht werden kann, sowie dass die gewährte Preisverbilligung beim Preisverhandlungs- Bonus- / Rabatt- Verfahren [6] durch mehrmalige, d.h. serielle, bzw. zeitlich- unabhängige Teilnahmen von Käufern [8] und / oder durch eine sporadische, d.h. zeitlich gestaffelte Teilnahme erzeugt wird
Unteranspruch 1.3 **dadurch gekennzeichnet,**
**dass** mehrere Teilnehmer [8] beim Preisverhandlungs- Bonus Verfahren gleichzeitig gleiche / ähnliche Produkte und Dienstleistungen sowohl im E-Commerce (E-Shop) [2/3/3a], als auch in der realen Geschäftswelt (Laden, Einkaufszentrum, Markt, Shop usw.) [4] mit dem Preisverhandlungs- Bonus- / Rabatt Verfahren [6] verbilligen und sofort kaufen können (Multiuser Verfahren für Parallel-Käufe), sowie dass der beim Bonus- / Rabatt - Preisverhandlung- Verfahren erzeugte Verkaufspreis [6] nur mittels dem Einsatz von sog. dynamischen und variablen PV-Optionen oder andern geeigneten Hilfsmitteln (virtuelle Zutrittstickets) [7] ermöglicht wird und die Summe der jeweils verwendeten und bezahlten PV-Optionen / Hilfsmittel wie Punkte, Gutscheine, Kassenzettel [25 / 32] (Zutrittstickets) [7] zur Preisverbilligung mitverwendet werden kann; im weiteren dass die benötigten PV-Optionen (Zutrittstickets) [7] sofort und direkt im Preisverhandlungs-Bonus- / Rabatt- Verfahren [6] via ein allgemeines Inkasso-Verfahren [10] und ein geeignetes Bezahlverfahren (Kreditkarten, Debitkarten) [11] direkt vom temporären Warenkorb-System [9] aus, erworben werden können, sowie dass die bereits vorhandenen und neu erworbenen PV-Optionen (Zutrittskarten) [7] direkt im PV-Optionen - Prozess- und Verwaltungssystem [7a] verwaltet und zur Verkaufspreis-Erzeugung mitverwendet werden können
Unteranspruch 1.4 **dadurch gekennzeichnet,**
**dass** der "Start-Button" [13] für die Benützung des Preisverhandlungs- Bonus- / Rabatt - Verfahrens [6] ein fester Bestandteil in jedem, mit dem Preisverhandlungs- integrierten E-Shops [2], bzw. gekoppelten temporären Warenkorbs [9] und dem E-Shop Warenkorb, sowie bei jeder virtuellen und / oder physischen Kasse [12] ist, und dass die verschiedenen Verkäufer von Produkten und Dienstleistungen [15] alle den gleichen einheitlichen Preisverhandlungsspeziftschen E-Shop [2] und das gleiche Preisverhandlungs- Bonus- Rabatt- Verfahren [6] und eine gemeinsame Content Management Verfahren (CMS) Plattform [14] verwenden können (Multiuser-Verfahren), oder dass jeder Verkäufer [ 15] von Produkten oder Dienstleistungen im E-Commerce [2/3/3a] und in der realen Geschäftswelt [4] ein dediziertes, d.h. sein eigenes firmenspezifisches, d.h. vom allgemeinen Preisverhandlungs- Bonus- / Rabatt- Verfahren [1] unabhängiges Preisverhandlungs- Bonus- / Rabatt- Verfahren [6] betreiben kann; sowie dass die Dateneinpflege (Adressdaten, Zahlungsdaten, Produkte- und Dienstleistungsdaten usw.) in das Preisverhandlungs- Bonus- / Rabatt- Verfahren [1] vom Verkäufer mittels dem integrierten Multiuser-fähigen Content-Management Verfahren (CMS) [14] erfolgt
Unteranspruch 1.5 **dadurch gekennzeichnet,**
**dass** ein Produkt und / oder eine Dienstleistung im E-Shop [2] des Preisverhandlungs-Bonus- / Rabatt- Verfahrens [1] via ein Inkasso-Verfahren bestellt und bezahlt [10] sowie mittels einesm, vom Preisverhandlungs- Bonus- / Rabatt- Verfahren [6] generierten, sicherheitsgeschützten Strichcode-Verfahrens [16], ein Produkt oder eine Dienstleistung für eine bestimmte Zeit beim Verkäufer reserviert ist und später vom Käufer im realen Geschäft [4] abgeholt werden kann
Unteranspruch 1.6 **dadurch gekennzeichnet,**
**dass** der durch das Preisverhandlungs- Bonus- / Rabatt- Verfahren [6] generierte und geschützte, bzw. verschlüsselte Strichcode [16] auf Papier [17] ausgedruckt und / oder mittels drahtgebundener und / oder drahtloser Technik auf ein mobiles Gerät mit oder ohne Bildschirm sowie jedes andere Gerät (z.B., Stick, NFC-Tag), des Teilnehmers / Käufers (Transport Medium) [5] geschickt werden kann, sowie dass der generierte und verschlüsselte Strichcode elektronisch über Internet und / oder drahtgebunden und / oder drahtlos (via z.B., Bluetooth, NFC, Wifi, SMS, MMS usw.) auf ein Empfangs-Portal und / oder einen Point of Sale Server oder ähnliches, sowie auf ein Datenbank-System [18] schickt wird, um dort mittels eines drahtbebundenen und / oder drahtlosen Endgerätes (z.B. Batch, Stick, Mobil-Gerät mit oder ohne Bildschirm, Mobiltelefon) [5] aktiviert und abgerufen zu werden und/oder dass der Strichcode vom Preisverhandlungs- Bonus- / Rabatt- Verfahren [1] (z.B. per Email oder SMS oder MMS) mit der Uebermittlung an den Teilnehmer (Ausdrucken auf Papier [17] und / oder herunterladen auf ein Gerät [5]) auch gleichzeitig elektronisch an den Verkäufer, bzw. die Lieferfirma [15] von Produkten oder Dienstleistungen auf das EDV- oder Kassen-System [18/26] oder ähnliches geschickt wird; zudem dass der registrierte Teilnehmer/Käufer [8] vom Preisverhandlungs- Bonus- / Rabatt-Verfahren [1] eine spezifische Software, z.B "App für Iphone oder ähnliches" auf sein Mobil-Gerät und / oder sein sonstiges drahtloses Gerät (Stick, Tag, usw) [5] laden kann und über eine verschlüsselte Internet- oder sonstige drahtgebundene und / oder drahtlose Verbindung [5a], mit dem Preisverhandlungs- Bonus- / Rabatt- Verfahren [6] automatisch verbunden wird
Unteranspruch 1.7 **dadurch gekennzeichnet,**
**dass** der sog. "Stopp-Preis (minimaler Verkaufspreis) bei einem Produkt und / oder einer Dienstleistung im Preisverhandlungs- Bonus- / Rabatt Verfahren [1] vom Anbieter / Verkäufer [15] selber festgelegt und im Administrations- und CMS- Verfahren [14] erfasst wird und dass die Höhe des gewährten Bonus / Rabatts vom Produkte- und Dienstleistungs-Verkäufer [15] aufgrund, der im Preisverhandlungs- Bonus- / Rabatt-Verfahren implementierten, mathematischen und betriebswirtschaftlichen Formeln [21] automatisiert festgelegt wird; sowie dass der "Sofort-Kaufpreis" für ein Produkt und / oder eine Dienstleistung im Preisverhandlungs- Bonus- / Rabatt- Verfahren [1] automatisch und dynamisch aus dem "Startpreis" minus Kosten der verwendeten PV-Optionen [7] (Teil- oder Gesamtkosten) minus den vom Teilnehmer/Käufer [8] erzeugten Preisverhandlungs- Bonus/ Rabatt errechnet wird
Unteranspruch 1.8 **dadurch gekennzeichnet,**
**dass** mehrere einzelne Teilnahmen (Preisverhandlungs- Durchläufe) von einem oder mehreren (gleichzeitigen oder nicht gleichzeitigen) Teilnehmer(n)/Käufer(n) [8] beim Preisverhandlungs- Bonus- / Rabatt- Verfahren [6] zu einem Paket von mehreren simulierten Preisverhandlungs- Durchläufen zusammengefasst werden können (Gruppenbildung) und dass der im Administrations- und CMS- Verfahren [14] festgelegte "Stopp-Preis, bzw. der Sofort-Kaufpreis" für ein Produkt und / oder eine Dienstleistung beim Preis Null (gratis) enden kann, sofern der AnbieterNerkäufer [15] dies so definiert hat und zwar ohne dass der AnbieterNerkäufer [15] dabei einen finanziellen Verlust verzeichnen muss, sowie dass der im Administrations- und CMS- Verfahren [14] erfasste "Sofortkaufpreis" mittels einer automatisierten Preisverbilligung, d.h. in Form einer telefonischen Preisanfrage [5b] durch den Teilnehmer im Preisverhandlungs- Bonus-/ Rabatt - Verfahren [6] erzeugt werden kann (Preisanfrage z.B. per Festnetz-Telefon, Mobiltelefon, 08xx / 09xx Rufnummern, SMS, MMS, Email, RFID / NFC-Gerät) [5 / 5a / 5b] (die Formel [21] für die Sofortkaufpreis, bzw. Preisverhandlungs- Bonus- / Rabatt-Berechnung lautet Startpreis minus Anzahl Preisanfrage-Gutschriften vom Telecom Operator (z.B XX Rp. / Anruf))
Unteranspruch 1.9 **dadurch gekennzeichnet,**
**dass** das Preisverhandlungs- Bonus- / Rabatt- Verfahren [1] mit einem externen, d.h. fremden Bonus-Verfahren (Partner-System) [23] online und / oder offline über eine feste und / oder temporäre Schnittstelle [24] verbunden sein kann und der im Preisverhandlungs- Bonus-/ Rabatt-Verfahren [6] erzeugte und wirksame Bonus vom externen Bonus-System [23] (mit)gesteuert wird, bzw. von den übermittelten Informationen abhängig ist; im weiteren dass das Preisverhandlungs- Bonus- / Rabatt-Verfahren [1] auch als externes, d.h. unabhängiges Blackbox- Preisverhandlungs- Bonus-/ Rabatt- Verfahren im E-Commerce (E-Shop) [2 /3/3a] und / oder in der realen Geschäftswelt (Shopping) [4] online und / oder offline, zentral und / oder dezentral auf einem Server und / oder einem andern Gerät [18], drahtgebunden und / oder drahtlos [28] betrieben werden kann oder dass mehrere Preisverhandlungs- Bonus- / Rabatt Verfahren ([6a] im Plattformverbund miteinander online und / oder offline verbunden sein können und dadurch ein kumulierter Bonus / Rabatt auf den angebotenen Produkten und Dienstleistungen gewährt werden kann (System - Gruppenbildung)
Unteranspruch 1.10 **dadurch gekennzeichnet,**
**dass** das Preisverhandlungs- Bonus- / Rabatt- Verfahren auch für andere beliebige Zwecke für E-Commerce [2 / 3 / 3a] und / oder in der realen Geschäftswelt [4] z.B. für Spiele, Unterhaltung, Handel und Partnerwahl, Bonusprogramm, Treuebonus usw. verwendet werden kann und dass ein Angebot (Produkt und / oder eine Dienstleistung) in der realen Geschäftswelt [4] und / oder aus einem Katalog [25], Prospekt [25], Kassenzettel [25] und / oder anderem Druckerzeugnis [25], durch die Verwendung eines Strichcodes oder anderen Codes / Labels via ein geeignetes Lesegerät (z.B. Kamera im Mobiltelefongerät, RFID- / NFC- / Bluetooth- Scanner mit Internetverbindung usw.) [5], als Zutrittsticket / Code [29] für den direkten und / oder automatisierten Zugang zum Preisverhandlungs- Bonus- / Rabatt- Verfahren benützt werden kann sowie des weiteren, dass in der realen Geschäftswelt [14] ein Produkt und / oder eine Dienstleistung mit einem RFID- und / oder NFC- / Bluetooth- Tag (Etikette) ausgerüstet sein kann und dass mit einem kompatiblen Mobilgerät z. B. mit einer RFID- / NFC- / Bluetooth- Funktion und *l* oder RFID- / NFC- / Bluetooth-Tag usw. [5] eine direkte (automatisierte) verschlüsselte, drahtgebundene oder drahtlose Verbindung via einer WLAN- bzw. einer Festnetz Internetverbindung [5a] zum Preisverhandlungs- Bonus- Rabatt- Verfahren [6] hergestellt wird, zudem dass der im Preisverhandlungs- Bonus- / Rabatt- Verfahren [6] erzeugte Bonus durch das Ausdrucken oder herunterladen, des mit dem Strichcode Verfahren [16] erzeugten Strichcodes auf Papier [17] und / oder ein mobiles Gerät [5] für die Bezahlung einer Konsumation (Restaurant, Hotel, Bar, Kantine usw. oder als Bahn- Bus- oder jedes andere beliebige Ticket) verwendet werden kann, sowie dass das Bedienpersonal die Gültigkeit (des mittels dem Strichcode-Verfahren [16] generierten Strichcodes) über eine drahtgebundene Kasse und / oder eine drahtlose mobile Kasse [26] überprüfen kann, oder dass der vom Preisverhandlungs- Verfahren erzeugte Bonus / Rabatt [6] von einem Teilnehmer / Käufer [8] zu einem andern verschenkt, verkauft und / oder elektronisch und / oder auf Papierform übertragen werden kann (der Bonus / Rabatt kann auch übers Kreuz bei den Angeboten verwendet werden,(z.B. wurde der Bonus für ein Nonfood-Produkt erzeugt, aber schliesslich für ein Food-Produkt verwendet); des weiteren dass das Preisverhandlungs- Bonus- / Rabatt- Verfahren [6] parallel zu andern E-Commerce Lösungen wie E-Shops und / oder Auktions-Plattformen [2/3/3a] eingesetzt werden kann und dadurch die Produkte und Dienstleistungen generell und / oder zusätzlich verbilligt werden können, oder dass das Preisverhandlungs- Bonus- / Rabatt Verfahren [6] unabhängig von E-Commerce (E-Shop und / oder Homepage, Auktionsplattform [2/3/3a] funktioniert, z.B. bei jedem Einkauf als Belohnungs-Verfahren für Käufer [8] von Produkten im E-Commerce [2/3/3a] und / oder in der realen Geschäftswelt [4] (analog von z.B. Kumulus- oder Supercard-Punkten) aktiv ist, oder dass der erzeugte Bonus / Rabatt vom Teilnehmer / Käufer [8] im Preisverhandlungs- Bonus- / Rabatt Verfahren [6] gesammelt und später (kumuliert) beim Kauf eines Produktes oder einer Dienstleistung (inkl. Gastronomie, Verkehr usw.) als Gesamt-Bonus / -Rabatt für die Verbilligung eingesetzt werden kann (Rabatt-Kumulation)
Unteranspruch 1.11 **dadurch gekennzeichnet,**
**dass** der Anbieter/Verkäufer [15] von Produkten und Dienstleistungen beim Preisverbilligungs- Bonus / Rabatt- Verfahren nach jedem Kauf automatisiert (Email, MMS, SMS, File-Transfer usw.) die Daten vom Kalkulations- und Abrechnungs-System [28] per PDF-Dokument und / oder eine andere unverfälschliche Form (elektronisch) [28a] zugestellt erhält, die für die Auslieferung des gekauften Produktes und / oder der Dienstleistung an den Käufer und der Abrechnung mit der Betreiberfirma des Preisverhandlungs- Bonus- / Rabatt- Verfahrens [1] (Rückerstattung der PV-Optionen-Einnahmen [7 / 7a] pro Anbieter / Verkäufer [15]) notwendig sind
Unteranspruch 1.12 **dadurch gekennzeichnet,**
**dass** das Preisverhandlungs- Bonus- / Rabatt- Verfahren [6] in Kombination mit anderen Rabatt- oder Bonus- Systemen [23] (auch mit andern Mechanismen und / oder Verfahren) verwendet werden kann, oder dass das Preisverhandlungs- Bonus- / Rabatt- Verfahren [6] auch ohne den Mechanismus der PV-Optionen (Zutrittstickets) [7 / 7a] funktioniert und die im Abrechnungs- und Kalkulations-System [28] verwendeten Berechnungs-Formeln [21] für die Bonus- / Rabatt- Erzeugung im E-Commerce (E-Shop) [2/3/3a] und / oder in der realen Geschäftswelt [4] Anwendung finden können, sowie dass das Preisverhandlungs - Bonus- / Rabatt- Verfahren [6] mit einem allfälligen Uptrade Auktions-Verfahren [31] (der Verkaufs-Preis wird nach oben erhöht) gekoppelt werden kann
Unteranspruch 1.13 **dadurch gekennzeichnet, dass** das Preisverhandlungs- Bonus- / Rabatt- Verfahren [6] auch auf öffentlich zugänglichen Informatik-Systemen (z.B. Point of Information / Point of Sale (POI, POS) Geräten) [18] als Preisverhandlungs- Bonus- / Rabatt- Verfahren [6] verwendet werden kann und damit als Marketing-Instrument (Verkaufsförderungsmittel) z.B. für Outlets d.h. Ausverkaufs-Funktionen im E-Commerce [2/3/3a] und / oder in der realen Geschäftswelt [4] verwendet werden kann, oder dass öffentliche Dienstleister (z.B. Bahnbetriebe, Verkehrsbetriebe, Kinos, Veranstalter, usw. ) [4] das Preisverhandlungs- Bonus- / Rabatt-Verfahren [6] als Kundenbindungs- und Belohnungs-System für Ihre Kunden / Käufer [8] verwenden können, oder dass öffentliche Dienstleister, (Verkäufer) [15] im E-Commerce [2/3/3a] und in der realen Geschäftswelt [4] das Preisverhandlungs- Bonus- / Rabatt-Verfahren [6] als Payback, bzw. Rückerstattungs-Verfahren (Gutschriften / Gutscheine usw.) [32 / 32a] verwenden können, oder dass der mit dem Preisverhandlungs- Bonus- / Rabatt- Verfahren [6] erzeugte Bonus/Rabatt mit Gutscheinen [32] und / oder anderen Mitteln für die Verbilligung von Produkten und / oder Dienstleistungen im E-Commerce [2/3/3a] und / oder der realen Geschäftswelt [14] kumuliert verwendet werden kann (Sonderaktionen)
Unteranspruch 1.14 **dadurch gekennzeichnet,**
**dass** der, vom Preisverhandlungs- Bonus- Rabatt- Verfahren [6] generierte Bonus / Rabatt, pro Produkt und Dienstleistung nur statisch anstatt dynamisch aufgebaut sein kann, oder dass anstatt eines Bonus / Rabatts eine generelle Preissenkung pro Produkt und / oder Dienstleistung über das Preisverhandlungs- Bonus- / Rabatt- System stattfinden kann (Ausverkauf / Outlet)
Unteranspruch 1.15 **dadurch gekennzeichnet,**
**dass** mehrere (variable und / oder fest definierte Anzahl Teilnehmer / Käufer [8] (identifizierte oder nicht identifizierte Gruppe von Käufern) gleichzeitig, einzelne und / oder mehrere gleiche oder ähnliche Produkte / Dienstleistungen im E-Commerce [2/3/3a] und / oder in der realen Geschäftswelt [4] mit dem Preisverhandlungs- Bonus- Rabatt-Verfahren [6] verbilligen und kaufen können

## Geänderte Patentansprüche

### Geänderte Patentansprüche gemäss Regel 137(2) EPÜ.

**1.** dass das Preisverhandlungs- Bonus- / Rabatt- Verfahren [6] auch auf öffentlich zugänglichen Informatik-Systemen (z.B. Point of Information / Point of Sale (POI, POS) Geräten) [18] als Preisverhandlungs- Bonus- / Rabatt- Verfahren [6] verwendet werden kann und damit als Marketing-Instrument (Verkaufsförderungsmittel) z.B. für Outlets d.h. Ausverkaufs-Funktionen im E-Commerce [2/3/3a] und / oder in der realen Geschäftswelt [4] verwendet werden kann, oder dass öffentliche Dienstleister (z.B. Bahnbetriebe, Verkehrsbetriebe, Kinos, Veranstalter, usw.) [4] das Preisverhandlungs- Bonus- / Rabatt-Verfahren [6] als Kundenbindungs- und Belohnungs-System für Ihre Kunden / Käufer [8] verwenden können, oder dass öffentliche Dienstleister, (Verkäufer) [15] im E-Commerce [2/3/3a] und in der realen Geschäftswelt [4] das Preisverhandlungs- Bonus- / Rabatt-Verfahren [6] als Payback, bzw. Rückerstattungs-Verfahren (Gutschriften / Gutscheine usw.) [32 / 32a] verwenden können, oder dass der mit dem Preisverhandlungs- Bonus- / Rabatt- Verfahren [6] erzeugte Bonus/Rabatt mit Gutscheinen [32] und / oder anderen Mitteln für die Verbilligung von Produkten und / oder Dienstleistungen im E-Commerce [2/3/3a] und / oder der realen Geschäftswelt [14] kumuliert verwendet werden kann (Sonderaktionen)
Unteranspruch 1.14 **dadurch gekennzeichnet,**
**dass** der, vom Preisverhandlungs- Bonus- Rabatt- Verfahren [6] generierte Bonus / Rabatt, pro Produkt und Dienstleistung nur statisch anstatt dynamisch aufgebaut sein kann, oder dass anstatt eines Bonus / Rabatts eine generelle Preissenkung pro Produkt und / oder Dienstleistung über das Preisverhandlungs- Bonus- / Rabatt- System stattfinden kann (Ausverkauf / Outlet)
Unteranspruch 1.15 **dadurch gekennzeichnet,**
**dass** mehrere (variable und / oder fest defnierte Anzahl Teilnehmer / Käufer [8] (identifizierte oder nicht identifizierte Gruppe von Käufern) gleichzeitig, einzelne und / oder mehrere gleiche oder ahnliche Produkte / Dienstleistungen im E-Commerce [2/3/3a] und / oder in der realen Geschäftswelt [4] mit dem Preisverhandlungs- Bonus- Rabatt-Verfahren [6] verbilligen und kaufen können
**Unteranspruch 1.16 dadurch gekennzeichnet,**
**dass** ein Käufer [8] [15] der einen offiziellen Verkaufspreis eines / einer Produktes / Dienstleistung in der realen Geschäftswelt [4] (Fig2) und im Internet E-Commerce [2] (Fig.2) / OVP O1-x (Fig2a) sowie den offiziellen Rabatt oder -Bonus [23] (Fig2) / OR 01-x (Fig2a) kennt, durch die Nutzung des der interaktiven und dynamischen Bonus-Rabatt Preisverhandlungs-Systems [1], welches gekoppelt ist mit Preis-Reduktionen pro Preisverhandlung [6] [6a] (Fig2) / PRPV O1-x (Fig2a), weiter verknüpft ist mit dem Zufallsgenerator-Verfahren, bestehend aus mathematischen Formeln [21] (Fig2) / DZG O1-x (Fig2a), zusätzlich zusammengefügt mit den PV-Optionen [7] (Fig2) / OPT 01-x (Fig2a), - einen tieferen, anderweitig nicht reproduzierbaren, d.h. mit herkömmlichen Rabatt/Bonus-Verfahren nicht erreichbarer Rabatt / Bonus, sowohl in der realen Geschäftswelt [4] (Fig2), als auch im E-Commerce [2] (Fig2) / VPN 01 (Fig2a) erzielt. Der gesamte Rabatt- und Bonus Prozess findet beim Preisverhandlungs-Verfahren [6] [6a] (Fig2) automatisiert innerhalb des Publikations-Zeitpunktes eines Produktes oder einer Dienstleistung [2] [4] [14] (Fig2) / PZ (Fig2a) und dem Kauf-Zeitpunkt [5] [12] [26] (Fig2) / KZ (Fig2a) eines Produktes oder einer Dienstleistung statt.
